# EUROPÄISCHE PATENTSCHRIFT

(11) **EP 0 841 803 B1**
(45) Veröffentlichungstag und Bekanntmachung des Hinweises auf die Patenterteilung: **26.11.2003**
(21) Anmeldenummer: 97116685.5
(22) Anmeldetag: 25.09.1997
(51) Int. Cl.: H04M 17/02, H04M 15/28

(54) **Verfahren und Schaltungsanordnung zur automatischen Anpassung von Telefonendgeräten an neue Tarife**
Method and circuit for automatic adaptation of telephone terminals for new charging rates
Méthode et circuit pour adaptation automatique de téléphones à de nouveaux tarifs

(30) Priorität: 07.11.1996 DE 19645807
(43) Veröffentlichungstag der Anmeldung: 13.05.1998
(73) Patentinhaber: Deutsche Telekom AG, 53113 Bonn (DE)
(72) Erfinder: Splittstösser, Karl-Heinz, Dipl.-Ing., 64297 Darmstadt (DE)

(56) Entgegenhaltungen:
- DE-A- 4 309 291

## Beschreibung

Die Erfindung betrifft ein Verfahren und eine Schaltungsanordnung zur automatisch gesteuerten Anpassung von Münz- bzw. Kartentelefonen an neue oder sich ändernde Blocktarife nach dem Oberbegriff des Patentanspruches 1 bzw. des Patentanspruches 6.

Bekannte Münz- und Kartentelefone steuern die Kassierung bzw. Abbuchung durch die vom Netzknoten gesendeten Tarifinformationen, zum Beispiel in Form von 16-kHz-Impulsen bei analoger Anschaltung der Endgeräte bzw. Betragsinformationen je Tarifeinheit bei Anschaltung des Endgerätes an das ISDN-System. Vor dem Aufbau einer Verbindung zu einem gewünschten Teilnehmer muß der eingestellte Minimumbetrag bei Münztelefonen eingeworfen sein bzw. als Guthaben auf der Karte bei Kartentelefonen gespeichert sein.

Handelt es sich bei der aufgebauten Verbindung im Gegensatz zu einer üblichen Verbindung ohne Blocktarifierung, um eine Verbindung mit Blocktarifierung, werden zu Beginn der Verbindung mehrere Tarifimpulse in kurzen Abständen (kleiner 1 Sekunde) gesendet. Dadurch treten folgende Probleme auf:
- der Anrufer bzw. der Benutzer des Münztelefons wird nicht über den erforderlichen Minimumbetrag zum erfolgreichen Aufbau der Verbindung informiert. Dem Benutzer bleibt keine Zeit, um Münzen nachzuwerfen, da hierfür die Zeit zu kurz ist. Die Folge ist, daß die Verbindung ohne Gegenleistung getrennt wird und die eingeworfenen Münzen kassiert werden. Dem Betreiber werden die Tarifeinheiten jedoch in Rechnung gestellt. Der Anrufer bzw. der Benutzer eines Kartentelefons wird nicht über den erforderlichen Minimumbetrag zum erfolgreichen Aufbau der Verbindung informiert. Der Betrag wird von der Karte automatisch abgebucht, vorausgesetzt auf der Karte ist noch der entsprechende Minimumbetrag gespeichert.

Bei den bekannten Münz- und Kartentelefonen werden die hier angegebenen Probleme derzeit dadurch gelöst, daß jede Telefonnummer mit Blocktarifierung mit der entsprechenden Behandlung, das heißt erhöhter Minimumbetrag bzw. Sperrung dieser Telefonnummer, entweder direkt am Endgerät
- wie bei den Münztelefonen für Private der Deutschen Telekom AG entsprechend der "Bedienungsanleitung Clubtelefon 5" und "Ergänzende Bedienungsanleitung Clubtelefon 4" oder anderer Anbieter
- oder über Softwaredownload am Endgerät wie bei den öffentlichen Münz- und Kartentelefonen der Deutschen Telekom AG als Eintrag in Telefonnummerntabellen programmiert werden. Dies erfordert jedoch einen ständigen aufwendigen Änderungsdienst. Bei Geräten, die der Mieter oder Käufer programmieren muß ist nicht sichergestellt, daß die Programmierung überhaupt bzw. rechtzeitig erfolgt.

Der Erfindung liegt deshalb die Aufgabe zugrunde, ein Verfahren und eine Schaltungsanordnung zur automatischen Anpassung von Münz- bzw. Kartentelefonen an neue oder sich ändernde Blocktarife zu schaffen, die ohne Programmierung bzw. über Softwaredownload direkt im/am Endgerät die gewünschten Funktionen automatisch ausführen, ohne daß ein wesentlich größerer Aufwand für die in den einzelnen Geräten notwendigen Speicher für die Telefonnummerntabellen dadurch entstehen soll.

Die erfindungsgemäße Lösung des Verfahrens ist im Kennzeichen des Patentanspruchs 1 charakterisiert.

Die erfindungsgemäße Lösung der Schaltung ist im Kennzeichen des Patentanspruches 6 charakterisiert.

Weitere Merkmale der Erfindung sind in der nachfolgenden Beschreibung und in den Patentansprüchen 2 bis 5 für das Verfahren bzw. 7 und 8 für die Vorrichtung bzw. Schaltung angegeben.

Die Erfindung wird im folgenden anhand von in der Zeichnung dargestellten Ausführungsbeispielen näher beschrieben. In der Beschreibung, in den Patentansprüchen, der Zusammenfassung und in der Zeichnung werden die in der hinten angeführten Liste der Bezugszeichen verwendeten Begriffe und die zugeordneten Bezugszeichen verwendet.

In der Zeichnung bedeuten:
- Fig. 1: eine Prinzipdarstellung für eine Verbindung ohne Blocktarifierung,
- Fig. 2: eine prinzipielle Darstellung einer Verbindung mit Blocktarifierung,
- Fig. 3: ein Struktur- bzw. Prinzipschaltbild und
- Fig. 4: ein Ablaufdiagramm gemäß des Verfahrens bzw. der ablaufenden Operationen in dem Prinzipschaltbild nach Fig. 3.

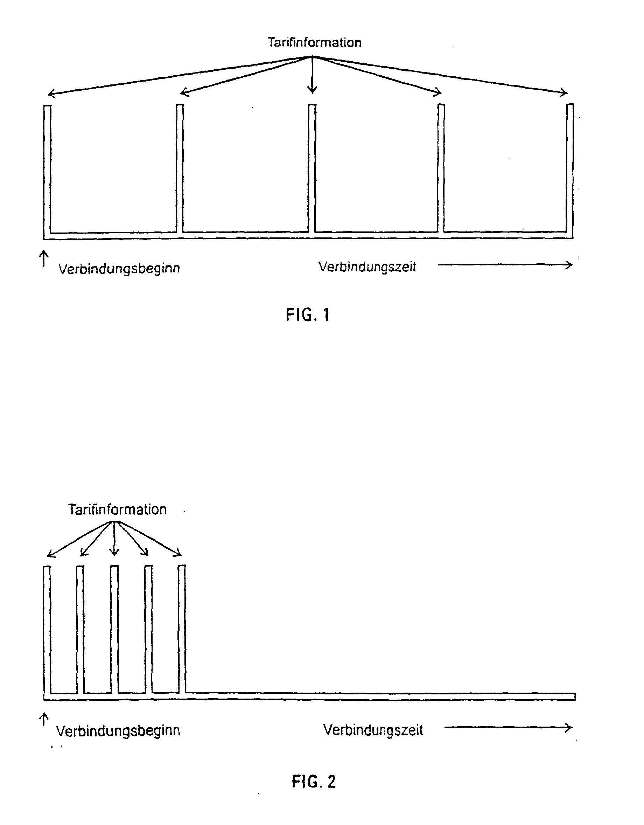

In Fig. 1 ist eine übliche Verbindung ohne Blocktarifierung dargestellt und zwar vom Verbindungsbeginn und während der Verbindungszeit. Die Tarifinformation wird zum Beispiel durch Tarifimpulse, die den Wert für eine Tarifeinheit darstellen, gezeigt. Handelt es sich jedoch um eine Verbindung mit Blocktarifierung wie sie in Fig. 2 dargestellt ist, werden zu Beginn der Verbindung mehrere Tarifimpulse in kurzen Abständen, die üblicherweise kleiner als 1 Sekunde sind, gesendet.

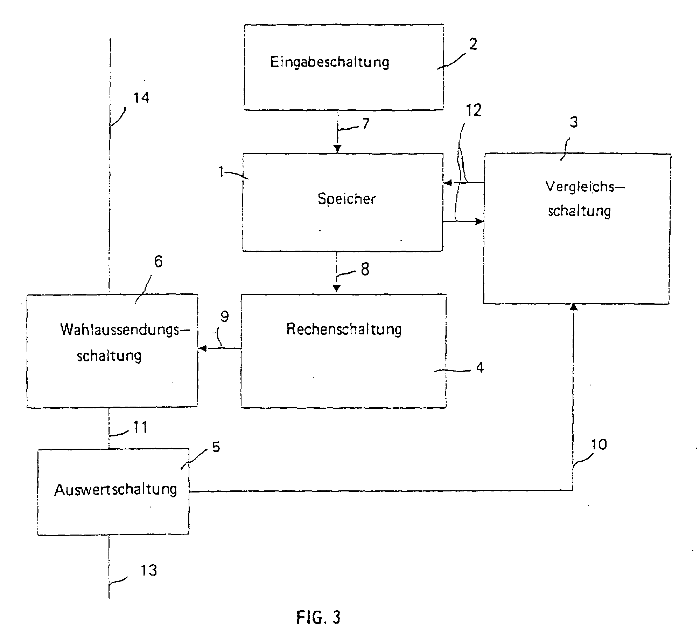

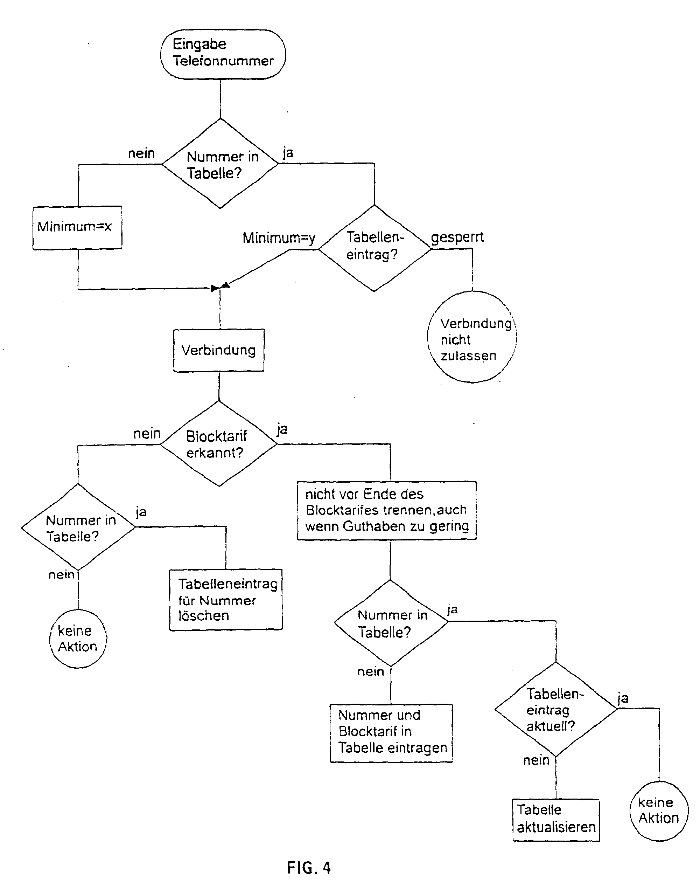

In Fig. 3 ist ein grundsätzliches Schaltbild bzw. die Grundstruktur einer Schaltung für ein Münz- und Kartentelefon dargestellt. Sie besteht aus der Eingabeschaltung 2 für die Telefonnummer mit Tastatur und Speicher, einem zusätzlichen Speicher 1, der über eine Leitung 7 mit der Eingabeschaltung 2 verbunden ist. Der Speicher 1 beinhaltet eine Tabelle der Telefonnummern und Tarifinformationen und ist als Lese-/Schreibspeicher, EEPROM oder ähnliches ausgeführt. Der Speicher 1 ist über Leitungen 12 mit einer Vergleichsschaltung 3 verbunden, die zum Vergleich der Tarifinformationen mit den Eintragungen in der Tabelle und zur Aktualisierung der Tabelle dient. Außerdem ist der Speicher 1 über eine Leitung 8 mit einer Rechenschaltung 4 verbunden, die zur Errechnung des Minimumbetrages aus den Tarifinformationen in der Tabelle dient. Diese Rechenschaltung 4 ist über eine Leitung 9 ihrerseits noch mit einer Wahlaussendungsschaltung 6 verbunden, die zur Wahlaussendung bei ausreichenden Guthaben dient und die einerseits mit einer Leitung 14 zum/vom Telefonnetz verbunden ist und andererseits mit einer Leitung 11 mit einer Auswertschaltung 5 zum Auswerten der Tarifinformationen. Diese Auswertschaltung ist außerdem mit einer Leitung 13 zur nicht dargestellten Sprechschaltung des jeweiligen Endgerätes verbunden und mit einer Leitung 10 mit der Vergleichsschaltung 3. Anhand von dem in Fig. 4 dargestellten Flußdiagramm bzw. Ablaufschema der Verfahrensschritte werden die Wirkungsweise der Schaltung nach Fig. 3 und die Operationsfolge des erfindungsgemäßen Verfahren im folgenden beschrieben.

Jede eingegebene bzw. angewählte Telefonnummer wird von dem mit einer Schaltung nach Fig. 3 ausgerüsteten Endgerät daraufhin überwacht, ob es sich um eine Telefonnummer mit Blocktarifierung handelt. Zuvor wird noch geprüft, ob die eingegebene Nummer bereits in der Tabelle des Speichers 1 gespeichert ist. Dabei ist durch das Kästchen "Minimum ist gleich x" der Minimumbetrag für nicht blocktarifierte Verbindungen dargestellt. Wenn die Nummer in der Tabelle vorhanden ist, erfolgt eine Prüfung auf Tabelleneintrag. Dabei wird aus dem in der Tabelle eingetragenen Blocktarif der Minimumbetrag errechnet, der mit "Mimimum ist gleich y" im Flußdiagramm dargestellt ist. Auf der anderen Seite Tabelleneintrag? ist zu sehen, daß beim Tabelleneintrag "gesperrt" die Verbindung nicht zugelassen wird. Handelt es sich nicht um eine Blocktarifierung und die Nummer befindet sich nicht in der Tabelle, dann erfolgt keine weitere Aktion gemäß Fig. 4. Ist hingegen die Nummer in der Tabelle eingetragen, dann wird der Tabelleneintrag für die Nummer gelöscht. Wird hingegen ein Blocktarif erkannt, dann wird der nächste Verfahrensschritt eingeleitet, der darin besteht, daß nicht vor Ende des Blocktarifes die Verbindung getrennt wird, auch wenn das eingegebene Guthaben im Münz- bzw. Kartentelefon zu gering ist. Danach wird wieder geprüft, ist die Nummer in der Tabelle, wenn nein dann wird die Nummer und der Blocktarif in die Tabelle eingetragen und wenn ja, dann wird geprüft, ob der Tabelleneintrag aktuell ist. Ist er aktuell, dann geschieht keine Aktion, ist er nicht aktuell, dann wird die Tabelle aktualisiert.

Im nachfolgenden werden nocheinmal die grundsätzlichen Verfahrensschritte und bestimmte Alternativen nacheinander beschrieben:
1. Jede eingegebene bzw. angewählte Telefonnummer wird vom Endgerät daraufhin überwacht, ob es sich um eine Telefonnummernblocktarifierung handelt. Als Kriterium gilt der Abstand der Tarifimpulse, wie zum Beispiel kleiner 1 Sekunde bei analoger Anschaltung der Gerätes bzw. der Betrag der Tarifinformation ist ein Vielfaches des Betrages für eine Tarifeinheit bei Anschaltung des Gerätes an ein ISDN-Netz.
2. Wird eine Telefonnummer mit Blocktarifierung erstmalig festgestellt, trennt das Endgerät die Verbindung nicht und zwar auch dann nicht, wenn ein zu geringes Guthaben in das Münz- bzw. Kartentelefon eingegeben worden ist. Alternativ kann das jeweilige Endgerät aus Sicherheitsgründen die Verbindung trennen, wenn zum Beispiel die Anzahl der Impulse im Block einen bestimmten Wert überschreitet.
3. Die Daten der Verbindung (Telefonnummer, Anzahl der Tarifimpulse im Block) werden dauerhaft im Endgerät gespeichert. Alternativ können die ersten Stellen der Telefonnummer, zum Beispiel die ersten sechs Stellen und die Anzahl der Tarifimpulse im Block dauerhaft im Speicher des Endgerätes gespeichert werden. Die ersten Stellen einer Telefonnummer sind in der Regel immer entscheidend für die Tarifierung.
4. Aus der Anzahl der Tarifimpulse wird eine spezielle Behandlung für diese Telefonnummer festgelegt, nämlich
   - spezieller Minimumbetrag bzw.
   - Sperrung dieser Telefonnummer.
   Mögliche Kriterien für die Behandlung sind:
   - der spezielle Minimumbetrag entspricht dem vom Betreiber des Endgerätes eingegebenen Betrag für einen Tarifimpuls des Blockes multipliziert mit der Anzahl der Tarifimpulse des Blockes.
   - ergibt sich aus der oben angegebenen Rechnung ein Wert, der nicht in das Münztelefon eingeworfen werden kann bzw. der den Wert der geringwertigsten zu verwendenden Telefonkarte übersteigt, wird die Telefonnummer als gesperrt, das heißt als nicht mehr anwählbar markiert bzw. gekennzeichnet.
   - die oben angegebenen Werte können auch geringer angesetzt werden.
5. Bei einer erneuten Anwahl dieser im Speicher des Endgerätes gespeicherten Telefonnummer werden die nun festliegenden Kriterien zur Behandlung gemäß Fig. 4 benutzt.
6. Bei allen Verbindungsaufbauten zu dieser gespeicherten Telefonnummer bzw. zu einer Telefonnummer, die mit den gespeicherten Stellen beginnt, wird die Anzahl der Tarifimpulse im Block überwacht und bei einer Änderung gegenüber den gespeicherten die alte Behandlung mit der neuen überschrieben wie dies in Fig. 4 gezeigt ist:
   - ist die Anzahl der Tarifimpulse im Block geringer als die gespeicherte, wird nur der Betrag für die geringere Anzahl der Impulse kassiert.
   - ist die Anzahl der Tarifimpulse im Block größer als die gespeicherte, wird der Betrag für die gespeicherte Anzahl der Impulse kassiert. Die Verbindung wird jedoch nicht wegen zu geringen Guthabens getrennt, um die neue Anzahl der Tarifimpulse im Block zu ermitteln und speichern zu können.

Alternativ ist es auch möglich, aus Sicherheitsgründen die alten Kriterien erst nach mehrmaligen Auftreten der neuen zu überschreiben.

Die hier angegebenen Verfahrens- bzw. Operationsschritte im Endgerät werden also automatisch und für den Benutzer des Endgerätes nicht nachteilig spürbar und ohne einen wesentlich größeren Aufwand an notwendigen Speicherbausteinen für die Telefonnummerntabellen erreicht.

Ein derartig ausgerüstetes Endgerät, wie zum Beispiel ein Münz- oder ein Kartentelefon braucht deshalb bei der Einführung von neuen Telefonnummern mit Blocktarifierung, der Änderung der Tarifimpulse im Block und beim Wegfall von Telefonnummern mit Blocktarifierung nicht mehr direkt oder über Softwaredownload angepaßt zu werden. Auch kann nicht mehr die sonst erforderliche Umprogrammierung vergessen werden, weil die Anpassung automatisch im Gerät durch die erfindungsgemäße Schaltung und durch das erfindungsgemäße Verfahren erfolgt.

### Liste der Bezugszeichen

- 1: Speicher
- 2: Eingabeschaltung
- 3: Vergleichsschaltung
- 4: Rechenschaltung
- 5: Auswertschaltung
- 6: Wahlaussendungsschaltung
- 7,8,9,10: Leitungen
- 11: Leitung zwischen Auswert- und Wahlaussendungsschaltung
- 12: Leitungen
- 13: Leitung zur Sprechschaltung des Endgerätes
- 14: Leitung zum/vom Telefonnetz

## Patentansprüche

1. Verfahren zur automatisch gesteuerten Anpassung von Endgeräten in Telefonnetzen, insbesondere von Münz- und Kartentelefonen an neue bzw. sich ändernde Blocktarife, wobei die Kassierung bzw. Abbuchung durch die von einem Netzknoten gesendeten Tarifinformationen, wie zum Beispiel der 16-kHz-Impulse bei analoger Anschaltung und der Betragsinformationen je Tarifeinheit bei ISDN-Anschaltung, gesteuert wird, **dadurch gekennzeichnet,**
**daß** jede eingegebene bzw. angewählte Telefonnummer vom Endgerät darauf überwacht wird, ob es sich um eine Telefonnummer mit Blocktarifierung handelt,
**daß** beim erstmaligen Feststellen einer Telefonnummer mit Blocktarifierung das Endgerät nicht wegen zu gering eingegebenen Guthabens die Verbindung trennt,
**daß** die Daten der Verbindung, nämlich die Telefonnummer und die Anzahl der Tarifimpulse im Block, dauerhaft in einem Speicher (1) im Endgerät gespeichert werden,
**daß** aus der Anzahl der Tarifimpulse eine spezielle Behandlung für diese Telefonnummer festgelegt wird,
**daß** bei einer erneuten Anwahl dieser gespeicherten Telefonnummer zugeordnete Speicherkriterien zur weiteren automatischen Behandlung benutzt werden und
**daß** bei allen Verbindungsaufbauten zu dieser gespeicherten Telefonnummer bzw. zu einer Telefonnummer, die mit den gespeicherten Stellen beginnt, die Anzahl der Tarifimpulse im Block überwacht und bei einer Änderung gegenüber den gespeicherten die alte Behandlung mit der neuen überschrieben wird.

2. Verfahren nach Patentanspruch 1, **dadurch gekennzeichnet,**
**daß** eine spezielle Behandlung für eine Telefonnummer dadurch festgelegt wird, daß ein spezieller Minimumbetrag dem vom Betreiber des Gerätes eingegebenen Betrag für einen Tarifimpuls des Blockes multipliziert mit der Anzahl der Tarifimpulse des Blockes entspricht und
**daß** die Telefonnummer als gesperrt **gekennzeichnet** bzw. markiert wird, wenn der errechnete Minimumbetrag größer ist, als der, der in das Münztelefon eingegeben werden kann bzw. der den Wert der geringstwertigsten zu verwendeten Telefonkarte übersteigt.

3. Verfahren nach Patentanspruch 1, **dadurch gekennzeichnet,**
**daß** die Anzahl der Tarifimpulse im Block überwacht wird,
**daß** nur der entsprechende Betrag für die geringere Anzahl der Impulse automatisch kassiert wird, wenn die Anzahl der Tarifimpulse im Block geringer als die gespeicherte ist und
**daß** der entsprechende Betrag für die gespeicherte Anzahl der Impulse kassiert wird, wenn die Anzahl der Tarifimpulse im Block größer als die gespeicherte ist.

4. Verfahren nach einem der Patentansprüche 1 bis 3, **dadurch gekennzeichnet,**
**daß** eine aufgebaute Verbindung nicht wegen zu geringen Guthabens getrennt wird, um die neue Anzahl der Tarifimpulse im Block zu ermitteln und zu speichern.

5. Verfahren nach einem der Patentansprüche 1 bis 3, **dadurch gekennzeichnet,**
**daß** alternativ nur die ersten Stellen der Telefonnummer und die Anzahl der Tarifimpulse im Block dauerhaft im Speicher (1) des jeweiligen Endgerätes gespeichert werden, die für die Tarifierung entscheidend sind.

6. Schaltungsanordnung zur automatisch gesteuerten Anpassung von Endgeräten in Telefonnetzen, insbesondere von Münz- und Kartentelefonen an neue bzw. sich ändernde Blocktarife, wobei die Kassierung bzw. Abbuchung durch die von einem Netzknoten gesendeten Tarifinformationen, wie zum Beispiel der 16-kHz-Impulse bei analoger Anschaltung und der Betragsinformationen je Tarifeinheit bei ISDN-Anschaltung, gesteuert wird, **dadurch gekennzeichnet,**
**daß** eine Eingabeschaltung (2) für Telefonnummern über eine Leitung (7) mit einem Speicher (1), der Tabellen der Telefonnummern und Tarifinformationen enthält, verbunden ist, der seinerseits über Leitungen (12) mit einer Vergleichsschaltung (3) verbunden ist, die zum Vergleich der Tarifinformationen mit den Einträgen in der Tabelle und zur Aktualisierung der Tabelle dient,
**daß** der Speicher (1) über eine Leitung (8) mit einer Rechenschaltung (4) verbunden ist, die zur Errechnung des Minimumbetrages aus den Tarifinformationen in der Tabelle dient,
**daß** diese Rechenschaltung (4) über eine weitere Leitung (9) mit einer Wahlaussendungsschaltung (6) verbunden ist, die über eine Leitung (14) mit dem Telefonnetz und über eine Leitung (11) mit einer Auswertschaltung (5) zur Auswertung der Tarifinformationen verbunden ist, und
**daß** die Auswertschaltung (5) über eine weitere Leitung (13) mit einer Sprechschaltung des Endgerätes verbunden ist und andererseits über eine Leitung (10) mit der Vergleichschaltung (3).

7. Schaltungsanordnung nach Patentanspruch 6, **dadurch gekennzeichnet,**
**daß** sie ausgestaltet ist zur Durchführung aller Schnitte des Verfahrens nach einem oder mehreren der Patentansprüche 1 bis 5 dient.

8. Schaltungsanordnung nach einem der Patentansprüche 6 oder 7, **dadurch gekennzeichnet,**
**daß** die Eingabeschaltung (2) für die Telefonnummern mit einer Tastatur und einem Speicher ausgerüstet ist und
**daß** der mit ihr verbundene weitere Speicher (1) entweder als Lese-/Schreibspeicher oder als EEPROM realisiert ist.

## Claims

1. Method for the automatically controlled adaptation of terminal devices in telephone networks, particularly of coin- and card-operated telephones, to new and/or changing block tariffs, charge collection and/or card debiting being controlled by the tariff information transmitted from a network node, such as the 16 kHz pulses in the case of analog connection and the charge information per tariff unit in the case of ISDN connection, **characterized in that**
each entered and/or dialled telephone number is monitored by the terminal device for whether it is a telephone number with block tariffing;
upon first-time detection of a telephone number with block tariffing, the terminal device does not disconnect the call because of insufficient entered credit;
the data of the call, namely the telephone number and the number of tariff pulses in the block, are permanently stored in a memory (1) in the terminal device;
from the number of tariff pulses a specific treatment is determined for that telephone number;
when said stored telephone number is dialled again, associated memory criteria are used for the further automatic treatment; and
for all call setups to said stored telephone number and/or to a telephone number beginning with the stored digits, the number of tariff pulses in the block is monitored and, if there is a change in relation to the ones stored, the old treatment is overwritten with the new one.

2. Method according to claim 1, **characterized in that**
a specific treatment for a telephone number is determined **in that** a specific minimum amount corresponds to the amount entered by the operator of the device for one tariff pulse of the block multiplied by the number of tariff pulses of the block; and
the telephone number is identified and/or marked as barred if the calculated minimum amount is greater than that which can be entered into the coin-operated telephone and/or which exceeds the value of the lowest-value usable telephone card.

3. Method according to claim 1, **characterized in that**
the number of tariff pulses in the block is monitored;
only the corresponding amount for the lower number of pulses is automatically collected if the number of tariff pulses in the block is smaller than the one stored; and
the corresponding amount for the stored number of pulses is collected if the number of tariff pulses in the block is greater than the one stored.

4. Method according to any one of claims 1 to 3, **characterized in that**
a call which has been set up is not disconnected because of insufficient credit in order to determine and store the new number of tariff pulses in the block.

5. Method according to any one of claims 1 to 3, **characterized in that**
alternatively, only the first digits of the telephone number and the number of tariff pulses in the block are permanently stored in the memory (1) of the respective terminal device which are decisive for tariffing.

6. Circuit arrangement for the automatically controlled adaptation of terminal devices in telephone networks, particularly of coin- and card-operated telephones, to new and/or changing block tariffs, charge collection and/or card debiting being controlled by the tariff information transmitted from a network node, such as the 16 kHz pulses in the case of analog connection and the charge information per tariff unit in the case of ISDN connection, **characterized in that**
an input circuit (2) for telephone numbers is connected via a line (7) to a memory (1) containing tables of telephone numbers and tariff information, said memory (1) being connected, in turn, via lines (12) to a comparison circuit (3) serving to compare the tariff information with the entries in the table and to update the table;
the memory (1) is connected via a line (8) to a computing circuit (4) serving to calculate the minimum amount from the tariff information in the table;
said computing circuit (4) is connected via a further line (9) to a dialling circuit (6), said dialling circuit (6) being connected via a line (14) to the telephone network and via a line (11) to an evaluation circuit (5) for evaluating the tariff information; and
the evaluation circuit (5) is connected via a further line (13) to a voice circuit of the terminal device and, on the other hand, via a line (10) to the comparison circuit (3).

7. Circuit arrangement according to claim 6, **characterized in that**
said circuit arrangement is designed to implement all the steps of the method according to any one or more of claims 1 to 5.

8. Circuit arrangement according to any one of claims 6 or 7, **characterized in that**
the input circuit (2) for telephone numbers is equipped with a keypad and a memory; and
the thereto connected further memory (1) is in the form of either a read/write memory or an EEPROM.

## Revendications

1. Procédé d'adaptation à commande automatique des équipements terminaux dans les réseaux téléphoniques, notamment des publiphones à pièces et à cartes, à des tarifs en blocs nouveaux ou évoluant, l'encaissement ou le recouvrement étant pilotés par les informations tarifaires envoyées par un noeud de réseau, comme par exemple les impulsions à 16 kHz en connexion analogique ou les informations sur les prix par unité tarifaire en connexion RNIS, **caractérisé en ce que**
pour chaque numéro téléphonique introduit ou composé, l'équipement terminal vérifie s'il s'agit d'un numéro à tarification en blocs,
lors de la première prise en compte d'un numéro à tarification en blocs, l'équipement terminal ne coupe pas la communication pour introduction d'un avoir insuffisant,
les données de la communication, à savoir le numéro téléphonique et le nombre des impulsions tarifaires par bloc, sont mémorisés en permanence dans une mémoire (1) à l'intérieur de l'équipement terminal,
le nombre des impulsions tarifaires donne lieu à un traitement spécial de ce numéro téléphonique,
lors d'un nouvel appel de ce numéro mémorisé, des critères de mémorisation dédiés sont utilisés pour la continuation du traitement automatique,
pour toutes les phases d'établissement d'une communication vers ce numéro mémorisé ou vers un numéro commençant par les chiffres mémorisés, le nombre des impulsions tarifaires dans le bloc est contrôlé, le nouveau traitement se substituant à l'ancien en cas d'écart par rapport aux impulsions mémorisées.

2. Procédé selon la revendication 1, **caractérisé en ce que**
un traitement spécial d'un numéro téléphonique est déterminé par le fait qu'un montant minimum spécial correspond au montant introduit par l'exploitant de l'équipement pour une impulsion tarifaire du bloc, multiplié par le nombre des impulsions tarifaires du bloc et
le numéro téléphonique est signalé ou marqué comme bloqué lorsque le montant minimum calculé est supérieur à celui pouvant être introduit dans le publiphone à pièces ou dépasse la valeur minimum que peut avoir une carte téléphonique.

3. Procédé selon la revendication 1, **caractérisé en ce que**
le nombre des impulsions tarifaires dans le bloc est contrôlé
seul est encaissé automatiquement le montant correspondant au nombre inférieur d'impulsions lorsque le nombre des impulsions tarifaires dans le bloc est inférieur au nombre mémorisé et
le montant correspondant au nombre mémorisé d'impulsions est encaissé lorsque le nombre des impulsions tarifaires dans lé bloc est supérieur au nombre mémorisé.

4. Procédé selon l'une des revendications 1 à 3, **caractérisé en ce que**
une communication établie n'est pas coupée en raison d'un avoir insuffisant, pour calculer et mémoriser le nouveau nombre d'impulsions tarifaires dans le bloc.

5. Procédé selon l'une des revendications 1 à 3, **caractérisé en ce que**
en alternative, seuls sont mémorisés en permanence dans la mémoire (1) de l'équipement terminal les premiers chiffres du numéro téléphonique et le nombre des impulsions tarifaires dans le bloc qui sont déterminantes pour la tarification.

6. Montage de connexion pour l'adaptation à commande automatique des équipements terminaux dans les réseaux téléphoniques, notamment des publiphones à pièces et à cartes, à des tarifs en blocs nouveaux ou évoluant, l'encaissement ou le recouvrement étant pilotés par les informations tarifaires envoyées par un noeud de réseau, comme par exemple les impulsions à 16 kHz en connexion analogique ou les informations sur les prix par unité tarifaire en connexion RNIS, **caractérisé en ce que**
un montage d'introduction de numéros téléphoniques (2) est relié par une ligne (7) à une mémoire (1) contenant des tableaux de numéros téléphoniques et des informations tarifaires, laquelle mémoire est à son tour reliée par des lignes (12) à un montage de comparaison (3) servant à comparer les informations tarifaires avec les inscriptions portées dans le tableau et à mettre à jour le tableau,
la mémoire (1) est reliée par une ligne (8) avec un montage de calcul (4) servant à calculer le montant minimum à partir des informations tarifaires contenues dans le tableau,
ce montage de calcul (4) est relié par une nouvelle ligne (9) à un montage d'émission d'impulsions de sélection (6), qui est relié par une ligne (14) au réseau téléphonique et par une ligne (11) à un montage d'évaluation (5) servant à analyser les informations tarifaires, et
le montage d'évaluation (5) est relié par une nouvelle ligne (13) à un montage de connexion vocale de l'équipement terminal et d'autre part par une ligne (10) au montage de comparaison (3).

7. Montage de connexion selon la revendication 6, **caractérisé en ce que**
qu'il est conçu pour l'exécution de toutes les phases du procédé selon l'une ou plusieurs des revendications 1 à 5.

8. Montage de connexion selon l'une des revendications 6 ou 7, **caractérisé en ce que**
le montage d'introduction de numéros téléphoniques (2) est équipé d'un clavier et d'une mémoire et
l'autre mémoire (1) qui lui est reliée est réalisée soit comme mémoire de lecture / d'écriture, soit comme EEPROM
